# EUROPEAN PATENT SPECIFICATION

(11) **EP 2 631 276 B1**
(45) Date of publication and mention of the grant of the patent: **20.06.2018**
(21) Application number: 13156930.3
(22) Date of filing: 27.02.2013
(51) Int. Cl.: C08L 97/00, C08L 61/04, C08L 61/06, F16D 69/02, F16D 13/00, F16D 69/00, C08H 7/00

(54) **Friction Material**
Reibungsmaterial
Matériau de friction

(30) Priority: 27.02.2012 JP 2012040423
(43) Date of publication of application: 28.08.2013
(73) Proprietor: AKEBONO BRAKE INDUSTRY CO., LTD., Chuo-ku Tokyo (JP)
(72) Inventor: Kuroe, Motoki, Chuo-ku, Tokyo (JP); Yano, Kiyoko, Chuo-ku, Tokyo (JP)
(74) Representative: Grünecker Patent- und Rechtsanwälte PartG mbB

(56) References cited:
- WO-A1-97/14747
- CN-A- 101 768 323
- DE-A1- 4 226 330
- US-A- 4 239 666
- US-A1- 2008 021 155

## Description

### BACKGROUND OF THE INVENTION

### Technical Field

The present invention relates to a method for producing a resin composition for a friction material with low environmental load using a plant-derived material, and to a friction material comprising the thus obtained resin composition, which is to be used for brake pads, brake linings, clutch facings and the like for automobiles, railway vehicles, industrial machines and the like.

### Background Art

A friction material used for brakes and clutches includes, for example, materials such as a fibrous base material for exerting a reinforcing action, a friction adjusting material for imparting a friction action and adjusting its friction performance and a binder for integrating these components.

Further, a problem of global warming due to an increase of a carbon dioxide concentration in atmospheric has recently been becoming a global problem, and techniques for reducing carbon dioxide emissions have been developed in various industrial fields. Also in the field of friction materials, consideration has been needed for wear powder generated from the friction materials and environmental load caused by the friction materials discarded, from the viewpoint of environmental preservation. Under these circumstances, it has been attracting attention to use carbon neutral plant-derived materials. For example, a lignin, which is a polyphenol much contained in wood and the like, is produced as a by-product when obtaining cellulose in the pulp production, so that there have been attempts to effectively utilize the lignin.

Patent Document 1 describes a biomass resin composition containing a phenol resin and lignocellulose.

Patent Documents 2 and 3 describes that noise, wear and sulfurous odor can be reduced by replacing about 1 to 30% by weight of a phenol resin, which is a binder component in a friction material composition, with an organosolv lignin substantially free from sulfur and low in water solubility.

Patent Documents 4 to 7 disclose different resin compositions for friction materials obtained by dry-mixing lignin with a phenolic resin.

Patent Document 1: JP-A-2004-352978
Patent Document 2: JP-T-11-513726 (the term "JP-T" as used herein means a published Japanese translation of a PCT application)
Patent Document 3: WO 97/14747 A1
Patent Document 4: DE 42 26 330 A1
Patent Document 5: US 4 239 666 A
Patent Document 6: US 2008/021144 A1
Patent Document 7: CN 101 768 323 A

### SUMMARY OF THE INVENTION

However, the resin composition described in Patent Document 1 is poor in heat resistance, because of containing cellulose and a drying oil. Further, in the binder resin composition described in Patent Document 2, a powder of the organosolv lignin is only blended as a raw material of the friction material, and is difficult to be compatible with the phenol resin. Accordingly, the thermal fluidity during the formation thereof is deteriorated. As a result, there has been still room for improvement, such as poor formability or the like.
In order to solve the above-mentioned problems, illustrative aspects of the present invention provides a friction material having improved formability and improved heat resistance, while reducing environmental load.

As a result of the various investigations, the present inventors have found that the above-described problem can be solved by the following friction material. That is, the present invention includes the following aspects.
<1> A method for producing a resin composition for a friction material, the method comprising performing polymer blending of a phenol resin and a lignin, wherein the polymer blending includes a method of solvent-mixing the phenol resin and the lignin with an organic solvent, followed by vacuum heat drying, thereby performing polymer blending, wherein the organic solvent is selected from any of methanol, ethanol, acetone, propanol, ethyl acetate and tetrahydrofuran.
<2> The method according to the above <1>, comprising:
   purifying the lignin with at least one solvent selected from the group consisting of methanol, ethanol, acetone and tetrahydrofuran; and
   performing polymer blending of the phenol resin and the lignin purified.
<3> The method according to the above <1> or <2>, wherein the lignin is at least one selected from the group consisting of a softwood lignin, a hardwood lignin and a herbaceous lignin.
<4> The method according to any one of the <1> to <3>, wherein the lignin has a weight average molecular weight of 5,000 or less, the weight average molecular weight being measured by using gel permeation chromatography.
<5> The method according to any one of the <1> to <4>, wherein the lignin has a softening point of 70 to 180°C.
<6> A friction material, comprising the resin composition for a friction material obtained by the method according to any one of the above <1> to <5>.

According to the present invention, a friction material having improved formability and improved heat resistance can be provided, even when a plant-derived material is used.

### DETAILED DESCRIPTION OF THE INVENTION

A resin composition according to the present invention, which is obtained by polymer blending of a phenol resin and a lignin, wherein the polymer blending includes a method of solvent-mixing the phenol resin and the lignin with an organic solvent, followed by vacuum heat drying, thereby performing polymer blending, wherein the organic solvent is selected from any of methanol, ethanol, acetone, propanol, ethyl acetate and tetrahydrofuran, can be used as a binder of a friction material. A phenol resin which is a conventional binder component is replaced with a lignin, thereby being able to obtain the friction material with low environmental load.

The lignin is a main component of plant cell walls occurring together with cellulose or hemicelluloses in a plant body such as wood, and is a polymer compound obtained by amorphously polymerizing phenylpropane as a basic unit. The lignin can be separated and extracted from the plant body by various methods. However, it is usually difficult to take out a lignin occurring in the plant body in its original form, and it is extracted as a lignin derivative.

In the present invention, the plant body from which the lignin is extracted and an extracting method thereof are not limited.

The plant body is not particularly limited as long as it contains a lignin and is wood or an herbaceous species in which a woody part is formed. Examples thereof include: softwoods such as Japanese cedar, pine and Japanese cypress; hardwoods such as beech and Japanese zelkova; and gramineous plants (herbaceous species) such as rice, barley, wheat, cone and bamboo. As described above, the lignin is roughly classified into three main groups: softwood lignin; hardwood lignin; and herbaceous lignin, on the basis of the plant body of origin. In the present invention, one or two or more of these can be used.

As the basic skeletons of the lignin, as shown in the following formulae, there are a guaiacyl type (type G) shown in formula G, a syringyl type (type S) shown in formula S, a p-hydroxyphenyl type (type H) shown in formula H, and the like, depending on the number of a methoxyl group as the characteristic functional groups which is substituted in place of a hydrogen atom in the phenylpropane structure as the basic unit. The lignin is different in the basic skeleton depending on the plant body of origin, and the softwood lignin is composed of the type G, the hardwood lignin is composed of the type G and Type S and the herbaceous lignin is composed of the type G, type S and type H.

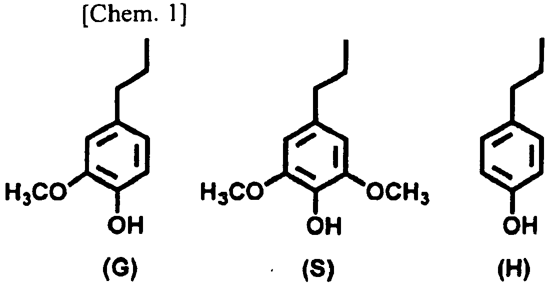

The extracting methods are roughly classified into two types: a method of hydrolyzing cellulose and hemicellulose in the plant body to leave a lignin as an insoluble residue; and a method of making a lignin into a solubilizable lignin, and then allowing the solubilizable lignin to be eluted. Examples of the former method include an acid hydrolysis method of allowing concentrated sulfuric acid to act on wooden fragments and separating a lignin from a remaining portion, and the like. Examples of the latter method include a soda cooking method of separating a lignin with sodium hydroxide, a phase separation conversion system of separating a lignin using a phenol as a solvent, a solvent method of separating a lignin using an organic solvent, an extraction method using a supercritical or subcritical fluid, and the like.

The above-mentioned plant bodies and lignin extraction methods may be appropriately combined with each other.

The molecular weight (weight average molecular weight) of the lignin is preferably 5,000 or less, and more preferably 4,000 or less. The weight average molecular weight within such a range is preferred because of showing good thermal fluidity during the formation of the friction material. The weight average molecular weight can be measured by using a gel permeation chromatography (GPC). More specifically, a sample dissolved in THF is measured by using a GPC system (manufactured by Waters) at a THF flow rate of 1 ml/min; TSK-GEL G2000 and G4000 (both manufactured by Tosoh Corporation) is used as a column, and an elution time is detected by using a differential refractometer; and the weight average molecular weight of the sample is calculated from a standard curve using polystyrene as a standard substance.

The softening point of the lignin to be blended in the present invention is preferably from 70 to 180°C, more preferably from 80 to 160°C, and still more preferably from 90 to 130°C. The softening point within such a range is preferred because of showing good thermal fluidity during the formation of the friction material. The softening point is a value measured by a thermomechanical measuring device. More specifically, the softening point can be measured as follows: the measurement is performed under the following conditions: temperature of from room temperature to 250°C; rate of temperature increase of 5°C/min; load of 1 gf; and measuring device of a thermomechanical measuring device (e.g. TMA-60: manufactured by Shimadzu Corporation), and a tangent intersection point at an inflection point is taken as the softening point.

In order to adjust the softening point of the lignin to the above-mentioned range, among crude extracts, examples thereof include a method where a lignin which is soluble in a solvent such as methanol, ethanol, acetone or tetrahydrofuran is purified. The lignin which is soluble in such a solvent has a relatively low weight average molecular weight, and meets the above-mentioned range of the softening point. For example, the softening point of a lignin (manufactured by Harima Chemicals Inc., product name: HIGH-PURITY LIGNIN) extracted from the gramineous plant by the soda cooking method and purified with each of the following organic solvents was measured, and the following results were obtained: the case of using methanol: 126°C, the case of using ethanol: 109°C, the case of using acetone: 107°C and the case of using tetrahydrofuran: 101°C. From these results, it has been revealed that a lignin having a softening point showing appropriate thermal fluidity required during the formation of the friction material can be obtained by selecting the appropriate organic solvent. However, when the crude extracts themselves already meet the above-mentioned softening point range, no purifying operation may be required.

The lignin may be used either alone or in combination of two or more thereof.

The blended amount of the lignin is preferably from 20 to 80% by mass, more preferably from 30 to 80% by mass, and still more preferably from 40 to 70% by mass, based on the entire resin composition. The blended amount of the lignin within such a range is preferred, because it is possible to form the friction material which shows friction performance equivalent to or higher than that of conventional ones. The blended amount of the lignin is preferably from 2 to 8% by mass, more preferably from 3 to 8% by mass, and still more preferably from 4 to 7% by mass, based on the entire friction material.

The resin composition for a friction material of the present invention is obtained by polymer blending of the phenol resin and the above-mentioned lignin. The phenol resin is not particularly limited, and a phenol resin which is usually used as a binder for friction materials can be used. Examples thereof include phenol resins and various modified phenol resins such as epoxy-modified phenol resins, NBR-modified phenol resins, silicone-modified phenol resins, alkylbenzene-modified phenol resins and cashew-modified phenol resins, and the like.

A well-known component which is usually used as a binder for friction materials can also be used together therewith, as needed. Examples thereof include thermosetting resins such as melamine resins, epoxy resins and polyimide resins, and these resins may be used either alone or in combination of two or more thereof.

The method of polymer blending according to the present invention comprises solvent-mixing the phenol resin and the lignin with an organic solvent, followed by vacuum heat drying, thereby performing polymer blending of both. As the organic solvent, a solvent selected from any one of methanol, ethanol, acetone, propanol (1-propanol, 2-propanol), ethyl acetate and tetrahydrofuran is used. The temperature of the vacuum heat drying can be set to 40 to 120°C, and the time of the vacuum heat drying can be set to 30 minutes to 4 hours.

The friction material of the present invention contains a fibrous base material, a friction adjusting material and a binder, and the above-mentioned resin composition for a friction material of the present invention is blended therein as the binder.

The fibrous base material used in the present invention is not particularly limited, and a fibrous base material which is usually used in this field is used. Examples thereof include organic fibers such as aromatic polyamide fibers and flameproofed acrylic fibers, metal fibers such as copper fibers and brass fibers, and inorganic fibers such as potassium titanate fibers, Al₂O₃-SiO₂-based ceramic fibers, biosoluble ceramic fibers, glass fibers and carbon fibers, and these fibers may be used either alone or in combination of two or more thereof. The fiber length of the fibrous base material is preferably from 100 to 2,500 µm, and the fiber diameter thereof is preferably from 3 to 600 µm.

The blended amount of the fibrous base material is preferably from 1 to 30% by mass, and more preferably from 5 to 15% by mass, based on the entire friction material.

The blended amount of the resin composition (binder) for a friction material of the present invention is not particularly limited, but it is preferably from 5 to 20% by mass, and more preferably from 5 to 10% by mass, based on the entire friction material.

In the present invention, as the friction adjusting material for imparting a friction action and adjusting its friction performance, various friction adjusting materials can be used depending on various purposes thereof, and various solid powder materials called abrasive materials, fillers, solid lubricating materials or the like, which are usually used in the friction material, can be used.

Examples thereof include: inorganic fillers such as calcium carbonate, barium sulfate, calcium hydroxide, iron sulfide, copper sulfide, silicon oxide, metal powders (such as copper powder, aluminum powder, bronze powder and zinc powder), vermiculite and mica; abrasive materials such as alumina, magnesia and zirconia; various rubber powders (such as rubber dust and tire powder); organic fillers such as cashew dust and melamine dust; solid lubricating materials such as graphite and molybdenum disulfide; and the like. These may be blended either alone or in combination of two or more thereof, depending on friction characteristics required for a product, for example, friction coefficient, wear resistance, vibration characteristics and squealing characteristics.

The blended amount of these friction adjusting materials is preferably from 50 to 90% by mass, and more preferably from 70 to 90% by mass, based on the entire friction material.

The friction material of the present invention can be produced by blending predetermined amounts of the above-mentioned fibrous base material, friction adjusting material and binder, and pre-forming the resulting blended material by a conventional method, followed by performing treatments such as thermoforming, heating and polishing.

A brake pad including the above-mentioned friction material can be produced by a process of thermoforming a pressure plate, which has been formed into a predetermined shape by a sheet metal press, subjected to a degreasing treatment and a primer treatment and coated with an adhesive, and the pre-formed body of the friction material in a thermoforming process at a forming temperature of 140 to 170°C and a forming pressure of 30 to 80 MPa for 2 to 10 minutes to integrally firmly fix both materials to each other, aftercuring the resulting formed article at a temperature of 150 to 300°C for 1 to 4 hours, and finally performing a finishing treatment.

### Examples

The present invention will be described in detail below with reference to examples and comparative examples.

With regard to the softening point of the lignin, the measurement was performed under the following conditions, and a tangent intersection point at an inflection point was taken as the softening point.

### (Measurement Conditions)

Temperature: from room temperature to 250°C
Rate of temperature increase: 5°C/min
Load: 1 gf
Measuring device: a thermomechanical measuring device (TMA-60: manufactured by Shimadzu Corporation)

### <Examples 1-1 to 1-5 and Comparative Example 1-1>

### (Production of Binder Resin Compositions)

A lignin (manufactured by Toyo Jyushi Corporation, product name: LIGNOPHENOL) extracted from wood by a phase separation conversion system was purified with acetone to obtain a lignin (weight average molecular weight: 3,700) having a softening point of 155°C.

The lignin obtained by the purification and a phenol resin (manufactured by Sumitomo Bakelite Co., Ltd., RANDOM NOVOLAC, weight average molecular weight: 7,200) were solvent-mixed using tetrahydrofuran at ratios shown in Table 1, followed by vacuum heat drying. Then, binder resin compositions A to E were obtained.

**[Table 1]**

| Binder resin composition | | A | B | C | D | E |
|---|---|---|---|---|---|---|
| Composition | Lignin (% by mass) | 10 | 20 | 30 | 40 | 50 |
| | Phenol resin (% by mass) | 90 | 80 | 70 | 60 | 50 |

To each of the binder resin compositions A to E, 10 phr of hexamethylenetetramine (manufactured by Wako Pure Chemical Industries, Ltd.) was added as a curing agent, and thermal fluidity evaluation by pressure flow measurement and heat resistance evaluation by thermal gravity analysis measurement were performed under the following conditions. In a binder resin composition F, the phenol resin was used alone, and the same amount as described above of hexamethylenetetramine was added thereto, followed by being similarly subjected to the thermal fluidity evaluation and the heat resistance evaluation. The results thereof are shown in Table 2.

### <Thermal Fluidity Evaluation (Pressure Flow Measurement)>

Between two steel plates which had been heated to 150°C, 0.3 g of a sample was placed, and a load of 5,000 kgf was applied thereto and kept for 4 minutes. Then, the load was removed, and the area of the sample circularly expanded and solidified was measured.

### <Heat Resistance Evaluation (Thermal Gravity Analysis (TGA) Measurement)>

After thermal curing (150°C × 1 h + 250°C × 3 h), 10 mg of a resin sample was placed in an alumina vessel, and measurement was performed while increasing the temperature thereof from 30 to 1,000°C at a rate of temperature increase of 10°C/min under a nitrogen atmosphere. The weight retention ratio (actual carbon ratio) at 800°C was compared.

**Table 2]**

| Binder resin composition | | A | B | C | D | E | F |
|---|---|---|---|---|---|---|---|
| Composition | Lignin (% by mass) | 10 | 20 | 30 | 40 | 50 | 0 |
| | Phenol resin (% by mass) | 90 | 80 | 70 | 60 | 50 | 100 |
| Thermal fluidity | Flow area (cm²) | 40 | 41 | 38 | 40 | 45 | 30 |
| Heat resistance | Weight retention ratio (%) | 54 | 53 | 53 | 53 | 55 | 54 |

From Table 2, it was shown that the binder resin compositions containing the wood-derived lignin were excellent in fluidity, because the flow area thereof was more increased than the case of the phenol resin. Further, they showed heat resistance equivalent to that of the phenol resin.

### (Production of Friction Material)

At a blending ratio shown in Table 3, each of the binder resin compositions obtained above and other materials were mixed by a mixer to prepare a raw material mixture of a friction material. This raw material mixture was thermoformed at a forming pressure of 50 MPa and a forming temperature of 150°C, and after the formation thereof, it was further heated at 250°C for 3 hours.

### <Friction Characteristic Test>

From the friction material prepared, a test specimen of 13 mm × 35 mm × 10 mm was cut out, and the test specimen was subjected to a friction characteristic test in accordance with JASO-C406 using a 1/10 scale brake dynamometer. The measurement results of the minimum friction coefficient (min µ) of a first fade and second and third effects (130 km/h, 0.6 G) are show in Table 3.

**[Table 3]**

| | | Example 1-1 | Example 1-2 | Example 1-3 | Example 1-4 | Example 1-5 | Comparative Example 1-1 |
|---|---|---|---|---|---|---|---|
| Kind of binder resin composition | | A | B | C | D | E | F |
| Ratio of lignin in binder resin composition (% by mass) | | 10 | 20 | 30 | 40 | 50 | 0 |
| Composition of friction material (% by mass) | Binder resin composition | 10 | 10 | 10 | 10 | 10 | 10 |
| | Hexamethylenetetramine | 1 | 1 | 1 | 1 | 1 | 1 |
| | Aramid pulp | 5 | 5 | 5 | 5 | 5 | 5 |
| | Inorganic fiber (Potassium titanate) | 25 | 25 | 25 | 25 | 25 | 25 |
| | Barium sulfate | 50 | 50 | 50 | 50 | 50 | 50 |
| | Graphite | 4 | 4 | 4 | 4 | 4 | 4 |
| | Cashew dust | 5 | 5 | 5 | 5 | 5 | 5 |
| Friction characteristic test | First fade (min µ) | 0.18 | 0.18 | 0.19 | 0.19 | 0.18 | 0.18 |
| | Second effect (130 km/h, 0.6 G) | 0.26 | 0.26 | 0.28 | 0.27 | 0.27 | 0.26 |
| | Third effect (130 km/h, 0.6 G) | 0.30 | 0.31 | 0.30 | 0.30 | 0.30 | 0.28 |

From the measurement results, the friction coefficient of the friction materials of Examples using, as the binder, the resin composition obtained by polymer blending of the wood-derived lignin and the phenol resin showed a value equivalent to or higher than that of the friction material of Comparative Example containing no lignin and using the phenol resin alone as the binder.

### <Examples 2-1 to 2-5 and Comparative Examples 2-1 and 2-2>

### (Production of Binder Resin Compositions)

A lignin (manufactured by Harima Chemicals Inc., product name: HIGH-PURITY LIGNIN, softening point: 165°C) extracted from a gramineous plant by a soda cooking method was purified with methanol to obtain a lignin (weight average molecular weight: 1,600) having a softening point of 126°C. The lignin obtained by the purification and the phenol resin used in Example 1 were solvent-mixed using methanol at ratios shown in Table 4, followed by vacuum heat drying. Thereby, binder resin compositions G to M were obtained.

To each of the binder resin compositions G to M, 10 phr of hexamethylenetetramine (manufactured by Wako Pure Chemical Industries, Ltd.) was added, and the thermal fluidity evaluation by the pressure flow measurement and the heat resistance evaluation by the thermal gravity analysis measurement were performed. The lignin and the phenol resin were each used alone in binder resin compositions L and M, respectively, and the same amount as described above of hexamethylenetetramine was added thereto, followed by being subjected to the same thermal fluidity evaluation and heat resistance evaluation. The results thereof are shown in Table 4.

**[Table 4]**

| Binder resin composition | | G | H | I | J | K | L | M |
|---|---|---|---|---|---|---|---|---|
| Composition | Lignin (% by mass) | 20 | 30 | 50 | 70 | 80 | 100 | 0 |
| | Phenol resin (% by mass) | 80 | 70 | 50 | 30 | 20 | 0 | 100 |
| Thermal fluidity | Flow area (cm²) | 40 | 38 | 35 | 30 | 25 | 22 | 30 |
| Heat resistance | Weight retention ratio (%) | 68 | 69 | 69 | 64 | 64 | 54 | 55 |

From Table 4, it was shown that the binders containing the resin compositions obtained by polymer blending of the gramineous plant-derived lignin and the phenol resin were more excellent in fluidity and heat resistance than the case of the binder containing only either one of the lignin or the phenol resin.

### (Production of Friction Material)

At a blending ratio shown in Table 5, each of the binder resin compositions and other materials were mixed by a mixer to prepare a raw material mixture of a friction material. This raw material mixture was thermoformed at a forming pressure of 50 MPa and a forming temperature of 150°C, and after the formation thereof, it was further heated at 250°C for 3 hours.

### <Friction Characteristic Test>

From the friction material prepared, a test specimen of 13 mm × 35 mm × 10 mm was cut out, and the test specimen was subjected to the friction characteristic test in accordance with JASO-C406 using the 1/10 scale brake dynamometer. The measurement results of the minimum friction coefficient (min µ) of a first fade and second and third effects (130 km/h, 0.6 G) are show in Table 5.

**[Table 5]**

| | | Example 2-1 | Example 2-2 | Example 2-3 | Example 2-4 | Example 2-5 | Comparative Example 2-1 | Comparative Example 2-2 |
|---|---|---|---|---|---|---|---|---|
| Kind of binder resin composition | | G | H | I | J | K | L | M |
| Ratio of lignin in binder resin composition (% by mass) | | 20 | 30 | 50 | 70 | 80 | 100 | 0 |
| Composition of friction material (% by mass) | Binder resin composition | 10 | 10 | 10 | 10 | 10 | 10 | 10 |
| | Hexamethylenetetramine | 1 | 1 | 1 | 1 | 1 | 1 | 1 |
| | Aramid pulp | 5 | 5 | 5 | 5 | 5 | 5 | 5 |
| | Inorganic fiber (Potassium titanate) | 25 | 25 | 25 | 25 | 25 | 25 | 25 |
| | Barium sulfate | 50 | 50 | 50 | 50 | 50 | 50 | 50 |
| | Graphite | 4 | 4 | 4 | 4 | 4 | 4 | 4 |
| | Cashew dust | 5 | 5 | 5 | 5 | 5 | 5 | 5 |
| Friction characteristic test | First fade (min µ) | 0.24 | 0.25 | 0.28 | 0.30 | 0.29 | - * | 0.18 |
| | Second effect (130 km/h, 0.6 G) | 0.27 | 0.27 | 0.29 | 0.32 | 0.32 | - * | 0.26 |
| | Third effect (130 km/h, 0.6 G) | 0.29 | 0.29 | 0.28 | 0.29 | 0.29 | - * | 0.28 |

| | | | | | | | | |
|---|---|---|---|---|---|---|---|---|
| * No data was obtained because the friction material could not be formed. | | | | | | | | |

From the measurement results, the friction coefficient of the friction materials of Examples using, as the binder, the resin composition obtained by polymer blending of the gramineous plant-derived lignin and the phenol resin was more improved than that of the friction materials of Comparative Examples using the binder containing only either one of the lignin or the phenol resin.

## Claims

1. A method for producing a resin composition for a friction material, the method comprising performing polymer blending of a phenol resin and a lignin, wherein the polymer blending includes a method of solvent-mixing the phenol resin and the lignin with an organic solvent, followed by vacuum heat drying, thereby performing polymer blending,
wherein the organic solvent is selected from any of methanol, ethanol, acetone, propanol, ethyl acetate and tetrahydrofuran.

2. The method according to claim 1, wherein the organic solvent is selected from methanol or tetrahydrofuran.

3. The method according to claim 1 or claim 2, wherein the organic solvent is tetrahydrofuran.

4. The method according to claim 1, comprising:
purifying the lignin with at least one solvent selected from the group consisting of methanol, ethanol, acetone and tetrahydrofuran; and
performing polymer blending of the phenol resin and the lignin purified.

5. The method according to claim 1 to 4, wherein the lignin is at least one selected from the group consisting of a softwood lignin, a hardwood lignin and a herbaceous lignin.

6. The method according to any one of claims 1 to 5, wherein the lignin has a weight average molecular weight of 5,000 or less, the weight average molecular weight being measured by using gel permeation chromatography.

7. The method according to any one of claims 1 to 6, wherein the lignin has a softening point of 70 to 180°C.

8. A friction material, comprising the resin composition for a friction material obtained by the method according to any one of claims 1 to 7.

## Patentansprüche

1. Verfahren zum Herstellen einer Harzzusammensetzung für ein Reibungsmaterial, wobei das Verfahren das Herstellen einer Polymermischung aus einem Phenolharz und einem Lignin umfasst, wobei das Herstellen der Polymermischung ein Verfahren des Lösungsmittel-Mischens des Phenolharzes und des Lignins mit einem organischen Lösungsmittel, gefolgt von einer Vakuum-Wärme-Trocknung einschließt, wodurch das Herstellen der Polymermischung erfolgt,
wobei das organische Lösungsmittel aus beliebigen von Methanol, Ethanol, Aceton, Propanol, Ethylacetat und Tetrahydrofuran ausgewählt ist.

2. Verfahren gemäß Anspruch 1, wobei das organische Lösungsmittel aus Methanol oder Tetrahydrofuran ausgewählt ist.

3. Verfahren gemäß Anspruch 1 oder Anspruch 2, wobei das organische Lösungsmittel Tetrahydrofuran ist.

4. Verfahren gemäß Anspruch 1, umfassend:
Reinigen des Lignins mit wenigstens einem Lösungsmittel, ausgewählt aus der Gruppe bestehend aus Methanol, Ethanol, Aceton und Tetrahydrofuran; und
Herstellen der Polymermischung aus dem Phenolharz und dem gereinigten Lignin.

5. Verfahren gemäß Anspruch 1 bis 4, wobei das Lignin wenigstens eines, ausgewählt aus der Gruppe bestehend aus einem Nadelholzlignin, einem Laubholzlignin und einem Krautpflanzenlignin, ist.

6. Verfahren gemäß einem der Ansprüche 1 bis 5, wobei das Lignin ein Gewichtsmittel des Molekulargewichts von 5000 oder weniger aufweist, wobei das Gewichtsmittel des Molekulargewichts unter Verwendung von Gelpermeationschromatographie gemessen wird.

7. Verfahren gemäß einem der Ansprüche 1 bis 6, wobei das Lignin einen Erweichungspunkt von 70 bis 180 °C hat.

8. Reibungsmaterial, umfassend die Harzzusammensetzung für ein Reibungsmaterial, die durch das Verfahren gemäß einem der Ansprüche 1 bis 7 erhalten wird.

## Revendications

1. Procédé de production d'une composition de résine pour matériau de friction, le procédé comprenant la réalisation d'un mélange polymère d'une résine phénolique et d'une lignine, où le mélange polymère inclut un procédé de mélangeage au solvant de la résine phénolique et de la lignine avec un solvant organique, suivi par un séchage à la chaleur sous vide, ce qui permet de réaliser le mélange polymère,
le solvant organique étant choisi parmi l'un quelconque du méthanol, de l'éthanol, de l'acétone, du propanol, de l'acétate d'éthyle et du tétrahydrofurane.

2. Procédé selon la revendication 1, dans lequel le solvant organique est choisi parmi le méthanol et le tétrahydrofurane.

3. Procédé selon la revendication 1 ou la revendication 2, dans lequel le solvant organique est le tétrahydrofurane.

4. Procédé selon la revendication 1, comprenant :
une purification de la lignine avec au moins un solvant choisi dans le groupe constitué de méthanol, d'éthanol, d'acétone et de tétrahydrofurane ; et
la réalisation d'un mélange polymère de la résine phénolique et de la lignine purifiée.

5. Procédé selon une revendication 1 à 4, dans lequel la lignine est l'une au moins choisie dans le groupe constitué d'une lignine de bois tendre, d'une lignine de bois dur et d'une lignine herbacée.

6. Procédé selon l'une quelconque des revendications 1 à 5, dans lequel la lignine a une masse moléculaire moyenne en poids de 5 000 ou moins, la masse moléculaire moyenne en poids étant mesurée au moyen de chromatographie par perméation de gel.

7. Procédé selon l'une quelconque des revendications 1 à 6, dans lequel la lignine a un point de ramollissement de 70 à 180 °C.

8. Matériau de friction, comprenant la composition de résine pour matériau de friction obtenue par le procédé selon l'une quelconque des revendications 1 à 7.
